(19) Europäisches Patentamt
European Patent Office
Office européen des brevets

(11) Veröffentlichungsnummer : **0 192 999**
**B1**

(12) # EUROPÄISCHE PATENTSCHRIFT

(45) Veröffentlichungstag der Patentschrift : **05.04.89**

(51) Int. Cl.[4] : **C 10 G 33/04**, C 08 G 81/00

(21) Anmeldenummer : **86101349.8**

(22) Anmeldetag : **03.02.86**

(54) **Verwendung von Kondensationsprodukten von Thioalkylenoxiden oder Polythioalkylenoxiden mit Polyalkylenoxiden als Spalter für Wasser-in-Öl-Emulsionen.**

(30) Priorität : **12.02.85 DE 3504645**

(43) Veröffentlichungstag der Anmeldung : **03.09.86 Patentblatt 86/36**

(45) Bekanntmachung des Hinweises auf die Patenterteilung : **05.04.89 Patentblatt 89/14**

(84) Benannte Vertragsstaaten : **AT DE FR GB NL**

(56) Entgegenhaltungen :
**EP-A- 0 055 433**
**EP-A- 0 055 434**
**FR-A- 1 216 229**
**FR-A- 2 020 199**
**US-A- 3 087 899**
**US-A- 4 183 821**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Scholl, Thomas, Dr.**
**Breslauer Strasse 31**
**D-4150 Krefeld 11 (DE)**
Erfinder : **Oberkirch, Wolfgang, Dr.**
**Gregor-Mendel-Strasse 8**
**D-5090 Leverkusen 1 (DE)**
Erfinder : **Perrey, Hermann, Dr.**
**Auf der Rheinaue 8**
**D-4150 Krefeld 11 (DE)**

**EP 0 192 999 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung von schwefelhaltigen Polyethern auf der Basis von (Poly-)Thioalkylenoxiden als Spalter für Wasser-in-Öl-Emulsionen, insbesondere als Spalter für Wasser-in-Rohöl-Emulsionen.

Erdöl wird zum überwiegenden Teil in Form wässriger Emulsionen, vorwiegend in Form von Wasser-in-Öl-Emulsionen gefördert, die im allgemeinen stabilisiert sind durch Inhaltsstoffe des Erdöls, sowie durch mitgeförderte feinstteilige Feststoffe aus der Lagerstätte. In dem einemulgierten Wasser sind häufig Salze, z. B. Natriumchlorid, Kalziumchlorid und/oder Magnesiumchlorid, gelöst. Transportkosten, Probleme infolge hoher Viskositäten der Emulsionen und Korrosionsprobleme in den Verarbeitungsanlagen machen es erforderlich, das Rohöl vor seinem Transport und/oder vor seiner Verarbeitung weitgehend zu entwässern, d. h. die geförderte Emulsion zu spalten.

Die Spaltung derartiger, häufig sehr stabiler Emulsionen erfolgt im allgemeinen durch den Zusatz von grenzflächenaktiven Verbindungen, sogenannten Demulgatoren oder Emulsionsspaltern, häufig unterstützt durch Erwärmung der Emulsion und/oder zusätzlichem Anlegen elektrischer Felder.

Maßgebend für die Qualität von Emulsionsspaltern sind in diesem Fall der Restwassergehalt, der Salz- und der Aschegehalt im verbleibenden Rohöl und der Restölgehalt im abgetrennten Wasser. Angestrebt wird eine Minimierung dieser Werte bei gleichzeitiger Minimierung der Anwendungskonzentration, der Einwirkungsdauer und der Anwendungstemperatur des Emulsionsspalters.

Die bisher zur Spaltung von Rohölemulsionen verwendeten Produkte, z. B. Blockpolymerisate aus Ethylenoxid und/oder 1,2-Propylenoxid (siehe z. B. US-PS 29 644 78), oxalkylierte Phenolharze (siehe z. B. US-PS 2 499 370 und US-PS 2 499 368) und mit Diisocyanaten, Dicarbonsäuren, Formaldehyd und/oder Diglycidylether vernetzte Block- oder Mischpolymerisate von Ethylen- und 1,2-Propylenoxid (siehe z. B. EP-OS 55 434 und EP-OS 55 433) sind nachteilig, da sie im allgemeinen die Anforderungen nur teilweise erfüllen. So verläuft die Spaltung häufig langsam oder unvollständig, wenn die Temperaturen nicht relativ hoch sind. Bekannte Emulsionsspalter sind auch häufig nur bei speziellen Emulsionen gut wirksam, nicht allgemein einsetzbar und erst in relativ hohen Dosierungen ausreichend wirksam. Auch die aus der FR-A-1 216 229 bekannten Polythioglykolether wirken bei weitem nicht so gut wie die erfindungsgemäß zu verwendenden Materialien.

Es wurde nun gefunden, daß chemische Stoffe der Formel (I)

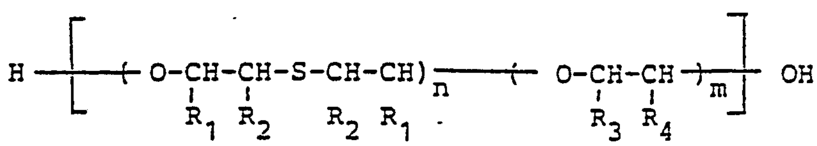

(I)

in der

$R_1$ und $R_2$ unabhängig voneinander für Wasserstoff und/oder eine geradkettige oder verzweigte $C_1$- bis $C_{20}$-Alkylgruppe stehen,

$R_3$ und $R_4$ unabhängig voneinander und unabhängig von benachbarten

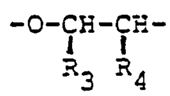

Gruppen jeweils für Wasserstoff, eine geradkettige oder verzweigte $C_1$- bis $C_{20}$-Alkylgruppe und/oder für —A—O—B stehen, wobei

A eine geradkettige oder verzweigte $C_1$- bis $C_{20}$-Alkylengruppe und

B eine geradkettige oder verzweigte $C_1$- bis $C_{20}$-Alkylen-OH-Gruppe oder eine

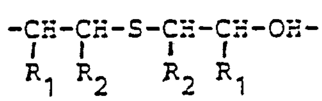

Gruppe mit $R_1$ und $R_2$ wie oben definiert, bedeuten,

n für eine ganze Zahl von 1 bis 100 steht und

m für eine ganze Zahl von 10 bis 2 500 steht,

sich mit Vorteil zur Spaltung von Wasser-in-Öl-Emulsionen verwenden lassen.

Von den Stoffen der Formel (I) sind solche bevorzugt, bei denen

$R_1$ und $R_2$ unabhängig voneinander für Wasserstoff und/oder eine geradkettige oder verzweigte $C_1$- bis $C_6$-Alkylgruppe stehen,

$R_3$ und $R_4$ unabhängig voneinander und unabhängig von benachbarten

$$-O-\underset{R_3}{CH}-\underset{R_4}{CH}-$$

Gruppen jeweils für Wasserstoff, eine geradkettige oder verzweigte $C_1$- bis $C_6$-Alkylgruppe stehen,

n für eine ganze Zahl von 1 bis 50 steht und

m für eine ganze Zahl von 10 bis 500 steht.

Besonders bevorzugt sind solche Stoffe der Formel (I), bei denen $R_1$ und $R_2$ unabhängig voneinander für Wasserstoff und/oder Methyl stehen, der Molekülteil

$$-\left(O-\underset{R_3}{CH}-\underset{R_4}{CH}\right)_m$$

aus 5 bis 80 Gew.-% $-O-CH_2-CH_2-$ und ergänzend zu 100 Gew.-% aus $-O-CH_2-\underset{CH_3}{CH}-$Einheiten in beliebiger Reihenfolge besteht,

n für eine ganze Zahl von 1 bis 30 steht und

m für eine ganze Zahl von 10 bis 100 steht.

Die Stoffe der Formel (I) können beispielsweise mittlere Molekulargewichte von 500 bis 500 000 (gemessen nach Dampfdruckosmose oder Gelpermeationschromatographie) aufweisen. Vorzugsweise beträgt ihr mittleres Molekulargewicht zwischen 10 000 und 100 000.

Die Stoffe der Formel (I)

$$H\left[\left(O-\underset{R_1}{CH}-\underset{R_2}{CH}-S-\underset{R_2}{CH}-\underset{R_1}{CH}\right)_n-\left(O-\underset{R_3}{CH}-\underset{R_4}{CH}\right)_m\right]OH \qquad (I)$$

in der

$R_1$ und $R_2$ unabhängig voneinander für Wasserstoff und/oder eine geradkettige oder verzweigte $C_1$- bis $C_{20}$-Alkylgruppe stehen,

$R_3$ und $R_4$ unabhängig voneinander und unabhängig von benachbarten

$$-O-\underset{R_3}{CH}-\underset{R_4}{CH}-$$

Gruppen jeweils für Wasserstoff, eine geradkettige oder verzweigte $C_1$- bis $C_{20}$-Alkylgruppe und/oder für $-A-O-B$ stehen, wobei

A eine geradkettige oder verzweigte $C_1$- bis $C_{20}$-Alkylengruppe und

B eine geradkettige oder verzweigte $C_1$- bis $C_{20}$-Alkylen-OH-Gruppe oder eine

$$-\underset{R_1}{CH}-\underset{R_2}{CH}-S-\underset{R_2}{CH}-\underset{R_1}{CH}-OH-$$

Gruppe mit $R_1$ und $R_2$ wie oben definiert, bedeuten,

n für eine ganze Zahl von 1 bis 100 steht und

m für eine ganze Zahl von 10 bis 2 500 steht,

können beispielsweise hergestellt werden, indem man ein gegebenenfalls polymeres Thiodiglykol der Formel (II)

$$H-\left(O-\underset{R_1}{CH}-\underset{R_2}{CH}-S-\underset{R_2}{CH}-\underset{R_1}{CH}\right)_n-OH \qquad (II)$$

in der $R_1$, $R_2$ und n die vorstehend angegebene Bedeutung haben, mit einem Polyalkylenoxid der Formel (III)

$$H-\left(O-\underset{R_3}{CH}-\underset{R_4}{CH}\right)_m-OH \qquad (III)$$

in der $R_3$, $R_4$ und m die vorstehend angegebene Bedeutung haben, bei erhöhter Temperatur und in Gegenwart sauer wirkender Substanzen umsetzt.

Vorzugsweise kommen dabei polymere Thiodiglykole der Formel (II) zum Einsatz, bei denen $R_1$ und $R_2$ unabhängig voneinander für Wasserstoff und/oder eine geradkettige oder verzweigte $C_1$- bis $C_6$-Alkylgruppe und n für eine ganze Zahl von 5 bis 30 stehen.

Besonders bevorzugt ist der Einsatz von Thiodiglykol, Bis-2-hydroxy-isopropylsulfid und Bis-2-hydroxy-isobutylsulfid und deren Polymere.

Von den Polyalkylenoxiden der Formel (III) kommen vorzugsweise solche zum Einsatz, bei denen $R_3$ und $R_4$ unabhängig voneinander und unabhängig von benachbarten

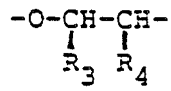

Gruppen jeweils für Wasserstoff oder eine geradkettige oder verzweigte $C_1$- bis $C_6$-Alkylgruppe und m für eine ganze Zahl von 10 bis 100 stehen.

Besonders bevorzugt ist der Einsatz von Ethylenoxid-Propylenoxid-Misch- und -Blockpolymerisaten, die insgesamt 10 bis 100 Ethylen- und Propylenoxid-Einheiten enthalten.

Thiodiglykole der Formel (II) mit $n = 1$ sind bekannte Verbindungen oder sind analog zu bekannten Verbindungen herzustellen (siehe z. B. Chem. Ber. 68, 588 (1935)).

Thiodiglykole der Formel (II) mit $n > 1$ können beispielsweise aus den entsprechenden Monomeren durch Kondensation in Gegenwart sauer wirkender Substanzen hergestellt werden. Als sauer wirkende Substanzen kommen beispielsweise anorganische Säuren, wie Schwefelsäure und Phosphorsäure, und Ester anorganischer Säuren infrage. Bevorzugt sind Phosphorsäure und deren Alkylester, beispielsweise Triethylphosphat. Vorzugsweise arbeitet man dabei mit erhöhten Temperaturen, z. B. 150-200 °C und entfernt das abgespaltene Wasser.

Die in das beschriebene Herstellungsverfahren eingesetzten Thiodiglykole der Formel (II) können sich unter den Reaktionsbedingungen des Verfahrens verändern. Beispielsweise können die Thiodiglykole mit sich selbst reagieren (n steigt) oder, weniger wahrscheinlich, Thiodiglykol-Einheiten abspalten (n sinkt). Der Thiodiglykol-Teil der Verbindungen der Formel (I) entspricht also nicht zwingend, jedoch häufig, dem eingesetzten Thiodiglykol der Formel (II).

Polyalkylenoxide der Formel (III) sind bekannte Verbindungen oder können analog zu solchen hergestellt werden (siehe z. B. DE-PS 950 548).

Verzweigte schwefelhaltige Polyalkylenoxide der Formel (III) können erhalten werden durch Kondensation von verzweigten nicht-schwefelhaltigen Polyalkylenoxiden mit Thioalkylenoxiden oder Polythioalkylenoxiden unter analogen Bedingungen wie sie weiter unten für die Umsetzung von gegebenenfalls polymeren Thiodiglykolen der Formel (II) mit Polyalkylenoxiden der Formel (III) beschrieben sind.

Die gegebenenfalls polymeren Thiodiglykole der Formel (II) können mit den Polyalkylenoxiden der Formel (III) in beliebigen molaren Verhältnissen umgesetzt werden. Bevorzugt liegt das molare Verhältnis von Verbindungen der Formel (II) zu Verbindungen der Formel (III) im Bereich 1,5 : 1 bis 1 : 1,5. Besonders bevorzugt werden diese beiden Verbindungen im äquimolaren Verhältnis eingesetzt.

Die Umsetzung kann gegebenenfalls in Gegenwart von Lösungsmitteln durchgeführt werden, z. B. wenn dies zur Erniedrigung der Viskosität des Reaktionsgemisches erforderlich erscheint. Geeignete Lösungsmittel sind z. B. aromatische Kohlenwasserstoffe. Der Zusatz von Lösungsmittel ist im allgemeinen nicht notwendig und beeinflußt nicht die Qualität der Reaktionsprodukte.

Geeignete Temperaturen für die Umsetzung von gegebenenfalls polymeren Thiodiglykolen der Formel (II) mit Polyalkylenoxiden der Formel (III) zu den Stoffen der Formel (I) sind beispielsweise solche von 140 bis 230 °C. Bevorzugt liegt diese Temperatur bei 180 bis 200 °C. Als sauer wirkende Substanzen kommen beispielsweise anorganische Säuren und deren saure Salze infrage. Bevorzugt sind Phosphorsäure, Schwefelsäure, Gemische aus Phosphorsäure und Phosphorpentoxid (= Pyrophosphorsäure), saure Phosphate wie $NaH_2PO_4$ und Metaphosphorsäure, besonders bevorzugt ist Orthophosphorsäure ($H_3PO_4$).

Von den sauer wirkenden Substanzen können beispielsweise von 0,1 bis 2,0 Gew.-% bezogen auf monomeres Thiodiglykol zugegen sein. Bevorzugt beträgt diese Menge von 0,3 bis 0,8 Gew.-%.

Das in der Reaktion entstehende Wasser kann beispielsweise bei Normaldruck abdestilliert werden. Es kann auch unter Zuhilfenahme eines Schleppmittels, z. B. von Xylol oder Tetralin, entfernt werden.

Die vorliegende Erfindung betrifft insbesondere die Verwendung von Stoffen der Formel (I) zur Spaltung von Wasser-in-Rohöl-Emulsionen. Im allgemeinen setzt man dabei die Stoffe der Formel (I) in Mengen von 10 bis 50 ppm bezogen auf die jeweilige Wasser-in-Öl-Emulsion zu. In vielen Fällen wirken die Stoffe der Formel (I) schon dann als Spalter, wenn man sie in Mengen von 10 bis 20 ppm, bezogen auf die jeweilige Wasser-in-Öl-Emulsion einsetzt. Die erfindungsgemäßen Emulsionsspalter entfalten im allgemeinen ihre Wirkung bei Temperaturen von ca. 30 °C und höher. Die Spaltung von Emulsionen erfolgt schneller oder in einer bestimmten Zeitspanne vollständiger als mit bekannten Produkten. Außerdem sind die erfindungsgemäß anzuwendenden Emulsionsspalter universeller anwendbar.

Zur Anwendung als Spalter für Wasser-in-Öl-Emulsionen können die Stoffe der Formel (I) als solche

eingesetzt werden. Man kann sie aber auch als Lösung in hochsiedenden Lösungsmitteln bereithalten, beispielsweise als 10 bis 15 Gew.-%ige Lösung in Alkylaromaten, beispielsweise Xylol, und diese Lösung zur Spaltung der Emulsionen einsetzten.

Es ist ausgesprochen überraschend, daß die gegenüber bekannten Emulsionenspaltern im molekularen Aufbau nicht grundsätzlich verschiedenen Stoffe der Formel (I) eine so wesentlich bessere Spaltwirkung auf Emulsionen zeigen.

Die folgenden Beispiele erläutern die vorliegende Erfindung ohne sie in irgendeiner Weise zu beschränken.

## Beispiele

### Beispiel 1

a) Herstellung eines Polythioalkylenoxids

Ein Gemisch aus 1 170 g Thiodiglykol und 4,8 g Phosphorsäure wurde unter schwachem Stickstoffstrom 5 Stunden auf 200 °C erhitzt. Dabei destillierten 100 ml Wasser ab. Man erhielt eine braune hochviskose Flüssigkeit, die nach längerem Stehen kristallisierte (OH-Zahl 123, Molekulargewicht 1300).

b) Herstellung eines Polythioalkylenoxids-Polyalkylenoxids

Ein Gemisch aus 30 g des Polythioalkylenoxids aus a) und 200 g Polyether (mit einem Molekulargewicht von 4 000 und 20 Gew.-% Ethylen- und 80 Gew.-% Propylenoxideinheiten im Gesamtmolekül) wurden unter schwachem Stickstoffstrom 5 Stunden auf 200 °C erhitzt. Dabei destillierten 6 ml Wasser ab. Man erhielt eine braune viskose Flüssigkeit mit einem mittleren Molekulargewicht von 42 000 und einer OH-Zahl von 2,5.

### Beispiel 2

Eine Mischung 25 g Thiodiglykol und 500 g Polyether (mit einem mittleren Molekulargewicht von 4 000, 15 Gew.-% Ethylenoxid- und 85 Gew.-% Propylenoxideinheiten) sowie 0,5 g Phosphorsäure wurde 6 Stunden auf 200 °C erhitzt. Man erhielt ein gelbes Öl mit einer OH-Zahl von 21 und einem mittleren Mokekulargewicht von 9 000.

### Beispiel 3

Es wurde verfahren wie in Beispiel 1 b), jedoch wurde ein Polythioalkylenoxid mit einem mittleren Molekulargewicht von 1 000 eingesetzt und solange kondensiert, bis 4,5 ml Wasser abdestilliert waren. Es wurde ein gelbliches zähflüssiges Harz mit einem mittleren Molekulargewicht von 14 500 (nach GPC) erhalten.

### Beispiel 4

15 g Polythiodiglykol mit einem mittleren Molekulargewicht von 1 500 wurden analog Beispiel 1b) mit 100 g eines trifunktionellen Polyethers (gestartet auf Trimethylolpropan, 17,5 Gew.-% Ethylenoxideinheiten, 82,5 Gew.-% Propylenoxideinheiten) umgesetzt. Es wurde eine rötlichbraune Flüssigkeit mit einem mittleren Molekulargewicht von 34 000 und einer OH-Zahl von 16 erhalten.

### Beispiel 5

15 g Polythiodiglykol mit einem mittleren Molekulargewicht von 2 500 wurden analog Beispiel 1b) mit 100 g eines trifunktionellen Polyethers (mit einem mittleren Molekulargewicht von 4 000, 17,5 Gew.-% Ethylenoxid- und 82,5 Gew.-% Propylenoxideinheiten) umgesetzt. Es wurde eine viskose Flüssigkeit mit einem mittleren Molekulargewicht von 43 000 und mit einer OH-Zahl von 13 erhalten.

### Beispiel 6

30 g Polythiodiglykol mit einem mittleren Molekulargewicht von 1 000 wurden analog Beispiel 1b) mit 200 g Polyether (mittleres Molekulargewicht 2 000, 20 Gew.-% Ethylenoxid- und 80 Gew.-% Propylenoxideinheiten) umgesetzt. Es wurde eine niedrigviskose Flüssigkeit mit einem mittleren Molekulargewicht von 11 000 und einer OH-Zahl von 18 erhalten.

### Beispiel 7

Eine aus einer norddeutschen Lagerstätte geförderte Wasser-in-Rohöl-Emulsion, die 30 Gew.-%

Wasser enthielt, wurde unter Zusatz verschiedener Emulsionsspalter, jeweils in einer Menge von 20 ppm, bezogen auf die Emulsion, bei einer Temperatur von 40 °C gespalten.

Nach 120 Minuten wurde reemulgiert und das Trennverhalten erneut beobachtet. Die Ergebnisse sind aus Tabelle 1 ersichtlich.

In Tabelle 1 bedeutet St. d. T. A gemäß dem Stand der Technik, wobei der Spalter ein lineares 1,2-Polypropylenoxid mit einem Molekulargewicht von 2 000 war, dem Ethylenoxid im Gewichtsverhältnis 4 : 1 angelagert worden war.

In Tabelle 1 bedeutet St. d. T. B gemäß dem Stand der Technik, wobei der Spalter ein mittels saurer Katalyse hergestelltes Nonylphenolformaldehydkondensat war, dem 90 % seines Gewichts Ethylenoxid angelagert worden waren.

Tabelle 1

| Spalter erhalten gemäß | abgetrenntes Wasser in Gew.-% vom ursprünglich vorhandenen Wasser nach | | | | | |
|---|---|---|---|---|---|---|
| | 10 | 30 | 60 | 120 | 180 | 240 Minuten |
| Beispiel 1 | 50 | 83 | 90 | 97 | 97 | 100 |
| Beispiel 2 | 3 | 33 | 43 | 50 | 70 | 73 |
| Beispiel 3 | 53 | 82 | 87 | 93 | 97 | 99 |
| Beispiel 4 | 48 | 80 | 86 | 88 | 92 | 94 |
| Beispiel 5 | 47 | 79 | 82 | 86 | 93 | 98 |
| Beispiel 6 | 51 | 82 | 88 | 96 | 98 | 99 |
| St. d. T. A[1] | 3 | 5 | 29 | 58 | 64 | 68 |
| St. d. T. B[2] | 10 | 17 | 20 | 24 | 43 | 48 |

[1] US-A-2 499 368 und 2 499 370, [2] US-A-2 964 478

## Beispiel 8

Es wurde verfahren wie in Beispiel 7, jedoch wurde eine aus einer Lagerstätte in Oberösterreich geförderte Wasser-in-Rohöl-Emulsion eingesetzt, die 42 Gew.-% Wasser enthielt, und die Emulsionsspalter in einer Menge von 30 ppm, bezogen auf die Emulsion, zugegeben. Die Ergebnisse sind aus Tabelle 2 ersichtlich.

Tabelle 2

| Spalter erhalten gemäß | abgetrenntes Wasser in Gew.-% vom ursprünglich vorhandenen Wasser nach | | | | |
|---|---|---|---|---|---|
| | 30 | 60 | 120 | 180 | 240 Minuten |
| Beispiel 1 | 76 | 86 | 94 | 95 | 96 |
| Beispiel 3 | 67 | 74 | 91 | 92 | 93 |
| Beispiel 6 | 69 | 82 | 93 | 95 | 95 |

## Beispiel 9

Es wurde verfahren wie in Beispiel 7, jedoch wurde eine aus einer Lagerstätte im Nordseebereich geförderte Wasser-in-Rohöl-Emulsion eingesetzt, die 30 Gew.-% Wasser enthielt, und die Emulsionsspalter in einer Menge von 30 ppm, bezogen auf die Emulsion, zugegeben. Die Ergebnisse sind aus Tabelle 3 ersichtlich.

Tabelle 3

| Spalter erhalten gemäß | abgetrenntes Wasser in Gew.-% vom ursprünglich vorhandenen Wasser nach | | | | | |
|---|---|---|---|---|---|---|
| | 10 | 30 | 60 | 120 | 180 | 240 Minuten |
| Beispiel 1 | 10 | 63 | 80 | 97 | 96 | 98 |
| Beispiel 6 | 14 | 57 | 87 | 97 | 97 | 100 |

**Patentansprüche**

1. Verwendung von chemischen Stoffen der Formel (I)

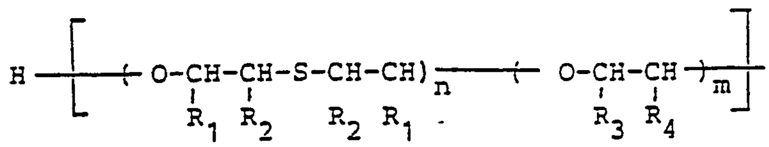 (I)

in der

$R_1$ und $R_2$ unabhängig voneinander für Wasserstoff und/oder eine geradkettige oder verzweigte $C_1$- bis $C_{20}$-Alkylgruppe stehen,

$R_3$ und $R_4$ unabhängig voneinander und unabhängig von benachbarten

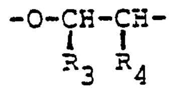

Gruppen jeweils für Wasserstoff, eine geradkettige oder verzweigte $C_1$- bis $C_{20}$-Alkylgruppe und/oder für —A—O—B stehen, wobei

A eine geradkettige oder verzweigte $C_1$- bis $C_{20}$-Alkylengruppe und

B eine geradkettige oder verzweigte $C_1$- bis $C_{20}$-Alkylen—OH—Gruppe oder eine

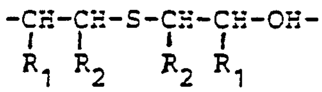

Gruppe mit $R_1$ und $R_2$ wie oben definiert, bedeuten,

n für eine ganze Zahl von 1 bis 100 steht und

m für eine ganze Zahl von 10 bis 2 500 steht,

zur Spaltung von Wasser-in-Öl-Emulsionen.

2. Verwendung gemäß Anspruch 1 zur Spaltung von Wasser-in-Rohöl-Emulsionen.

**Claims**

1. Use of chemical substances of the formula (I)

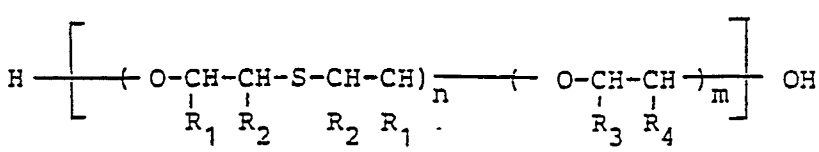 (I)

in which

$R_1$ and $R_2$, independently of each other represent hydrogen and/or a straight-chain or branched $C_1$ to $C_{20}$ alkyl group,

$R_3$ and $R_4$, independently of each other and independently of adjacent

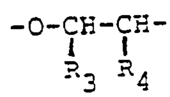

groups, in each case represent hydrogen, a straight-chain or branched $C_1$ to $C_{20}$ alkyl group and/or —A—O—B, where

A denotes a straight-chain or branched $C_1$ to $C_{20}$ alkylene group and

B denotes a straight-chain or branched $C_1$ to $C_{20}$ alkylene—OH group or a

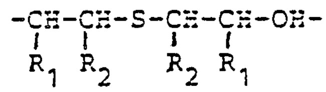

group with $R_1$ and $R_2$ as defined above,

n represents an integer from 1 to 100 and

m represents an integer from 10 to 2,500,

for breaking water-in-oil emulsions.

2. Use according to Claim 1 for breaking water-incrude oil emulsions.

**Revendications**

1. Utilisation de substances chimiques de formule (I)

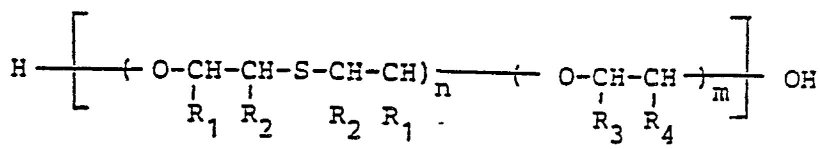
(I)

dans laquelle

$R_1$ et $R_2$ représentent chacun, indépendamment l'un de l'autre, un atome d'hydrogène et/ou un groupe alkyle en $C_1$ à $C_{20}$, linéaire ou ramifié,

$R_3$ et $R_4$ représentent chacun, indépendamment l'un de l'autre et indépendamment des groupes

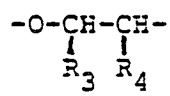

voisins un atome d'hydrogène, un groupe alkyle en $C_1$ à $C_{20}$, linéaire ou ramifié, et/ou —A—O—B, où

A représente un groupe alkylène en $C_1$ à $C_{20}$, linéaire ou ramifié, et

B représente un groupe alkylène —OH en $C_1$ à $C_{20}$, linéaire ou ramifié, ou bien un groupe

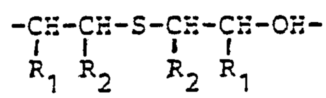

dans lequel $R_1$ et $R_2$ ont la signification définie ci-dessus,

n représente un nombre entier valant 1 à 100, et

m représente un nombre entier valant 10 à 2 500,

pour effectuer la cassure ou rupture d'émulsions du type eau dans huile.

2. Utilisation selon la revendication 1, pour casser des émulsions du type eau dans huile brute.